# FASCICULE DE BREVET EUROPEEN

(11) **EP 0 899 136 B1**
(45) Date de publication et mention de la délivrance du brevet: **10.04.2002**
(21) Numéro de dépôt: 98440171.1
(22) Date de dépôt: 04.08.1998
(51) Int. Cl.: B60H 1/34

(54) **Barillet d'aérateur pour un vehicule automobile**
Luftauslass für ein Kraftfahrzeug
Air diffuser for a motor vehicle

(30) Priorité: 04.08.1997 FR 9710113
(43) Date de publication de la demande: 03.03.1999
(73) Titulaire: MGI COUTIER (S.A.), F-01410 Champfromier (FR)
(72) Inventeur: Caoduro, Jean-Paul, 68510 Sierentz (FR)
(74) Mandataire: Nithardt, Roland

(56) Documents cités:
- EP-A- 0 782 939
- WO-A-94/00310
- FR-A- 2 760 694
- US-A- 5 072 657

## Description

La présente invention concerne un barillet d'aérateur pour un véhicule automobile comportant un corps monté dans l'habitacle du véhicule à la sortie d'un conduit d'air, au moins un jeu d'ailettes directionnelles pour défléchir le flux d'air, parallèles, pivotantes et montées dans ledit corps autour d'axes de pivotement fixes A, reliées entre elles par une barrette de liaison en des points de liaison B distants des axes de pivotement A, et une molette de commande montée en rotation autour d'un axe fixe dans ledit corps.

D'une manière connue, les barillets d'aérateur pourvus d'ailettes du type "rideau", c'est à dire d'ailettes alignées et pouvant obturer totalement la sortie d'air, comportent des moyens de commande des ailettes relativement complexes, nécessitant de nombreuses pièces. L'un des moyens prévoit que la molette de commande engrène un pignon satellite monté sur un axe fixe dans le corps. Ce pignon engrène à son tour et en sens inverse un pignon de commande. La rotation de ce pignon de commande entraîne le pivotement des ailettes au moyen d'une came prévue sur ledit pignon et un axe de commande prévue sur la barrette de liaison des ailettes.

Un autre moyen est décrit dans la publication EP-A-782 939 et prévoit que la molette est directement couplée à une des ailettes au moyen d'un axe de l'ailette entraînant la barrette de liaison pour commander les autres ailettes simultanément. La molette comporte une fente excentrée dans laquelle coulisse l'axe de l'ailette. Cette forme de transmission directe de la molette à une ailette de même que la transmission de l'effort de manoeuvre aux autres ailettes ne sont pas optimales. L'angle de manoeuvre de la molette est relativement faible, ce qui entraîne une mauvaise maîtrise des angles intermédiaires des ailettes. L'effort de manoeuvre nécessaire pour vaincre l'effort de fermeture des ailettes doit être relativement important. L'effort de fermeture exercé par la molette sur l'ailette n'est pas perpendiculaire et donc les ailettes ne tiennent pas suffisamment en position fermée et peuvent être déréglées manuellement. Les axes de pivotement des ailettes sur la barrette de liaison étant alignés, il faut exercer un effort de manoeuvre suffisant pour vaincre la souplesse de cette barrette de liaison qui a tendance à s'arc-bouter. Enfin, ce type de transmission est limité à des barillets de forme sensiblement plane.

Le but de la présente invention est de simplifier la conception de ce type de barillet d'aérateur pour réduire le nombre de pièces et le prix de revient tout en évitant les inconvénients mentionnés ci-dessus afin d'assurer une qualité de manoeuvre optimale des ailettes.

Ce but est atteint par un barillet d'aérateur tel que défini en préambule et caractérisé en ce que la barrette de liaison est disposée dans un plan sensiblement parallèle à celui défini par la molette de commande et en ce que la molette de commande est couplée positivement à ladite barrette de liaison par au moins un doigt de commande solidaire de l'une des pièces constituées par la molette et la barrette, et par au moins une came prévue sur l'autre pièce, ce doigt de commande étant sensiblement parallèle à l'axe de rotation de la molette.

Dans une forme de réalisation préférée de l'invention, le doigt de commande est solidaire de la molette et distant de son axe de rotation d'un rayon R, et la came est solidaire de la barrette de liaison.

Le doigt de commande peut traverser ledit corps par l'intermédiaire d'une lumière en arc de cercle dont le centre est confondu avec l'axe de rotation de la molette.

De préférence, ladite lumière s'étend sur un secteur angulaire d'angle α délimitant la rotation de la molette de commande entre deux positions extrêmes.

Dans la forme de réalisation préférée de l'invention, la came s'étend sur une longueur au moins égale à celle parcourue par le doigt de commande entre les deux positions extrêmes de la molette de commande de manière à commander la rotation des ailettes entre leurs deux positions extrêmes qui correspondent à une position des ailettes totalement fermée et une position des ailettes totalement ouverte.

La came peut être une rampé de forme gauche ou une rainure de forme gauche dont la section est sensiblement égale au diamètre du doigt de commande.

Selon une autre variante de réalisation, la came peut comporter une zone de verrouillage agencée pour verrouiller les ailettes en position fermée.

Selon une autre forme de réalisation, le barillet comporte deux cames coopérant respectivement avec deux doigts de commande, une des cames étant agencée pour ouvrir les ailettes et l'autre pour les fermer.

Selon encore une autre forme de réalisation, le doigt de commande est solidaire de la barrette de liaison et la came est solidaire de la molette de commande. Dans ce cas, la came peut être une rainure sensiblement en forme de V et comporter avantageusement à son point le plus bas un creux et le doigt de commande peut comporter une dent d'indexage agencée pour assurer le déplacement en continu et dans le bon sens des ailettes lors de la rotation de la molette de commande.

La distance entre l'axe de pivotement fixe A et le point de liaison B peut être différente pour chaque ailettes de manière à créer un effet éventail.

La présente invention et ses avantages apparaîtront mieux dans la description suivante de plusieurs exemples de réalisation non limitatifs, en référence aux dessins annexés, dans lesquels :
- la figure 1 représente une vue en coupe du barillet selon l'invention, les ailettes étant en position fermée,
- la figure 2 est une vue de côté en coupe du barillet de la figure 1 selon la ligne II-II,
- la figure 3 est une vue similaire à celle de la figure 1, les ailettes étant en position ouverte,
- les figures 4A et 4B sont des vues similaires à la figure 1 d'une première variante de réalisation de l'invention, les ailettes étant respectivement en position ouverture et en position fermée,
- la figure 5 représente une deuxième variante de réalisation de l'invention,
- les figures 6A à 6F sont des vues de la deuxième variante de réalisation, les ailettes étant dans différentes positions,
- la figure 7 représente une troisième variante de réalisation de l'invention, et
- la figure 8 représente une quatrième variante de réalisation de l'invention.

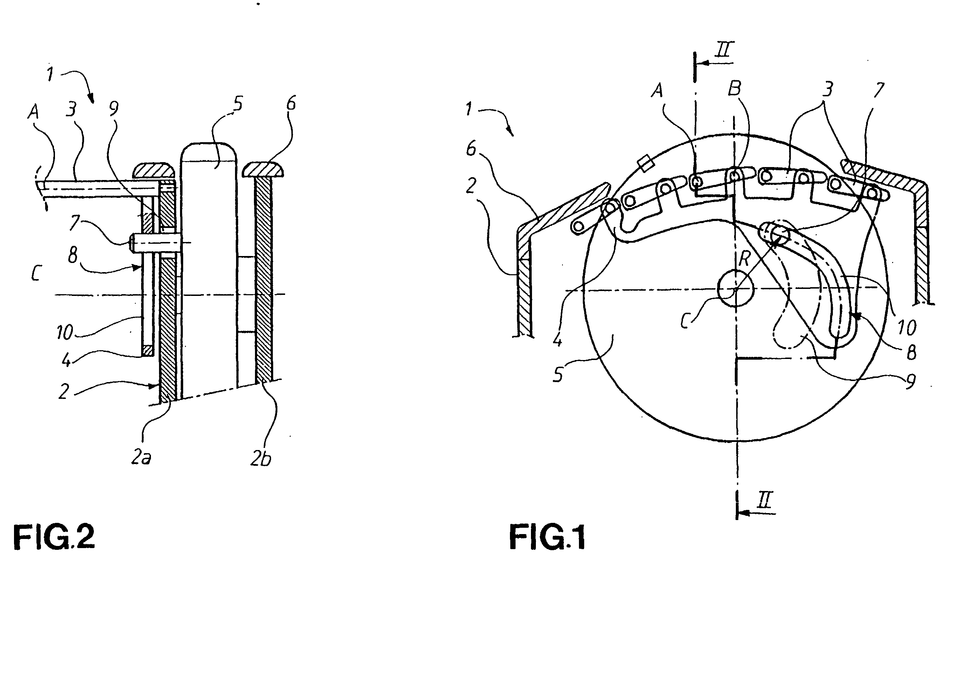

En référence aux figures 1 à 3, le barillet d'aérateur 1 selon l'invention comporte un corps 2 creux monté dans l'habitacle d'un véhicule à la sortie d'un conduit d'air du circuit de ventilation, un jeu d'ailettes directionnelles 3 pour défléchir le flux d'air reliées entre elles par une barrette de liaison 4, et une molette de commande 5 accessible de l'habitacle par l'utilisateur pour faire varier à guise la position desdites ailettes. Le corps 2 du barillet est fermé en face frontale par un capot d'aspect 6 laissant apparaître la molette de commande 5 et les ailettes directionnelles 3.

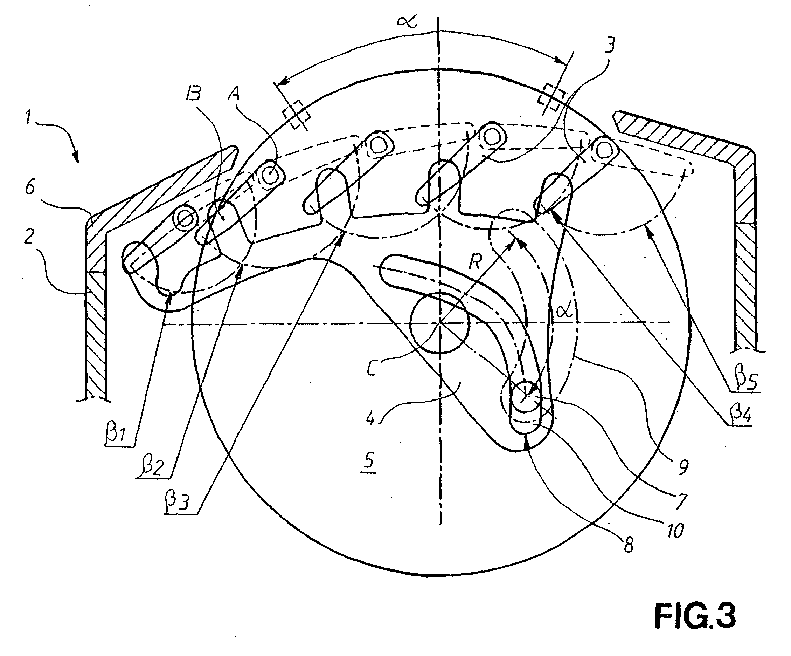

De manière connue, les ailettes directionnelles 3 sont disposées parallèles entre elles et montées dans le corps 2 de manière pivotante autour d'axes de pivotement fixes A. Elles sont disposées pour former un "rideau" c'est-à-dire qu'elles sont alignées de manière à obturer totalement la sortie du flux d'air dans une de leurs positions extrêmes représentée dans la figure 1. L'autre position extrême correspond à leur position totalement ouverte représentée dans la figure 3. Ces deux positions extrêmes sont décalées d'un angle β₁ à β₅ différent selon la position de chaque ailette 3, qui sont par exemple au nombre de cinq, ce nombre pouvant varier de 1 à 10 par exemple. Ces angles sont également représentés dans la figure 3 où la position fermée est illustrée en traits interrompus.

Ces ailettes directionnelles 3 sont reliées entre elles par la barrette de liaison 4 en des points de liaison B distants des axes de pivotement A pour créer un couple de rotation. Cette barrette de liaison 4 est commandée par la molette de commande 5 qui est montée en rotation dans ledit corps 2 autour d'un axe fixe C et entre deux parois parallèles 2a, 2b dudit corps. La barrette de liaison 4 et la molette de commande 5 sont disposées de préférence dans deux plans sensiblement parallèles.

La molette de commande 5 est couplée positivement à la barrette de liaison 4 par un doigt de commande 7 solidaire de la molette 5 qui coulisse sur une came 8 solidaire de la barrette de liaison 4. Bien entendu, l'inverse peut également être prévu, c'est-à-dire le doigt de commande 7 peut être solidaire de la barrette de liaison 4 et la camé 8 de la molette de commande 5.

Dans l'exemple de réalisation illustré, l'axe D du doigt de commande 7 est sensiblement parallèle à l'axe C de rotation de la molette de commande 5 et distant de cet axe d'un rayon R. Le doigt de commande 7 traverse ledit corps 2 par une rainure 9 présentant une forme en arc de cercle, de centre C, de rayon R et s'étendant sur un secteur angulaire α qui peut être compris entre 10° et 130°. Les extrémités de cette rainure 9 définissent les butées pour les deux positions extrêmes de la molette de commande 7 qui correspondent aux deux positions extrêmes des ailettes directionnelles 3, soit une position des ailettes totalement ouverte et une position des ailettes totalement fermée.

Dans l'exemple de réalisation illustré, la came 8 est constituée d'une rainure 10 de forme gauche prévue dans un prolongement de la barrette de liaison 4. Cette came 8 peut être également constituée d'une rampe de forme gauche dans une variante de réalisation. La rainure 10 a une section sensiblement égale au diamètre du doigt de commande 7 pour permettre son coulissement avec un léger frottement. Cette rainure 10 s'étend sur une longueur au moins égale au trajet parcouru par le doigt de commande 7 entre les deux positions extrêmes de la molette de commande 5. Elle a une forme gauche courbe qui permet de faire correspondre les deux positions extrêmes de la molette de commande 5 à celles des ailettes directionnelles 3. Et entre ces deux positions extrêmes de la molette de commande 5, le doigt de commande 7 occupe dans la rainure 10 des positions intermédiaires qui correspondent aux positions ouvertes intermédiaires des ailettes directionnelles 3. Ces positions ouvertes intermédiaires sont stables étant donné que le doigt de commande 7 est retenu par frottement dans la rainure 10.

Toutes les pièces formant ledit barillet d'aération 1 peuvent être réalisées dans une matière synthétique injectée, en utilisant ou non un procédé de surmoulage.

Le fonctionnement du barillet d'aérateur 1 selon l'invention est très simple. Quand les ailettes directionnelles 3 sont en position fermée, elles empêchent la sortie du flux d'air et jouent le rôle d'un volet d'obturation. Néanmoins, dans certaines réalisations, le conduit d'air peut être équipé d'un volet intérieur d'obturation commandé par un levier ou une molette indépendant. L'ouverture des ailettes directionnelles 3 est obtenue en manoeuvrant la molette de commande 5 qui actionne directement la barrette de liaison 4 par l'intermédiaire du doigt de commande 7 et de la rainure 10. Grâce à cette liaison directe, la rotation des ailettes directionnelles 3 a l'avantage d'être proportionnelle à celle de la molette de commande 5 sur toute la course angulaire α. Ainsi, on obtient une meilleure gestion des différentes positions des ailettes directionnelles 3 et des efforts de manoeuvre.

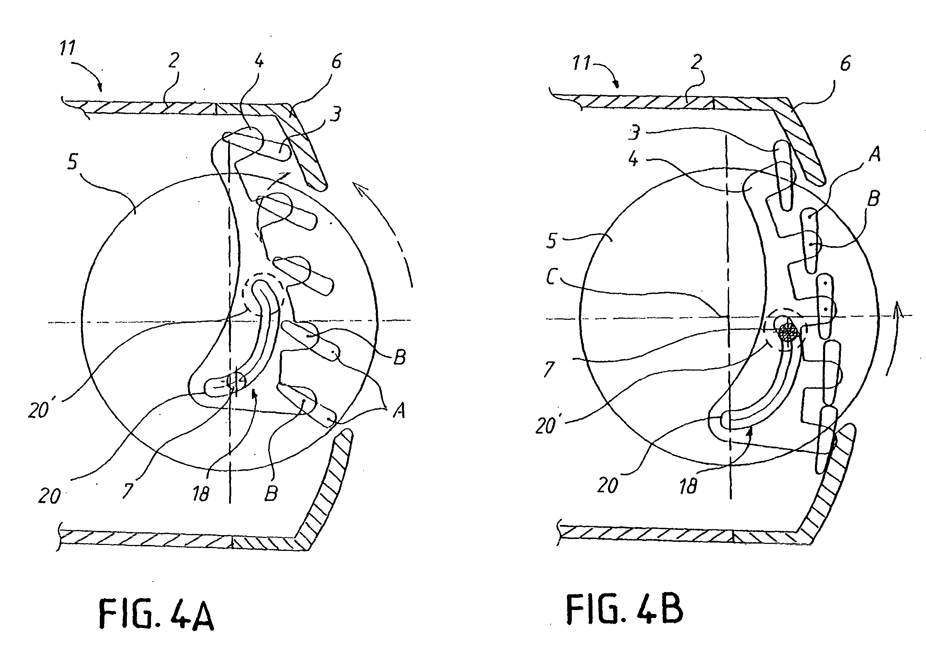

Les figures 4A et 4B représentent un barillet d'aération 11 qui constitue une première variante de réalisation du barillet d'aération 1 décrit précédemment. Toutes les pièces identiques portent le même numéro de référence. Seule la came 18 est différente. La rainure 20 de forme gauche qui la constitue comporte une zone de verrouillage 20' des ailettes 3 en position fermée. Dans cette zone de verrouillage 20', la rainure 20 comporte un coude orientant la rainure 20 sensiblement en direction de l'axe C de rotation de la molette 5. En position fermée (fig. 4B), le doigt de commande 7 se trouve dans la zone de verrouillage 20' juste après le coude. Les ailettes directionnelles 3 sont fermées et verrouillées dans cette position. En effet, elles ne peuvent pas être déréglées ou déplacées sous l'effet d'une pression manuelle exercée par l'utilisateur directement sur les ailettes car le doigt de commande 7 est bloqué dans la zone de verrouillage 20' et ne peut pas remonter le coude prévu dans la rainure 20. Seule la manoeuvre de la molette 5 permet de dégager le doigt de commande 7 de cette zone de verrouillage 20' et d'ouvrir les ailettes 3.

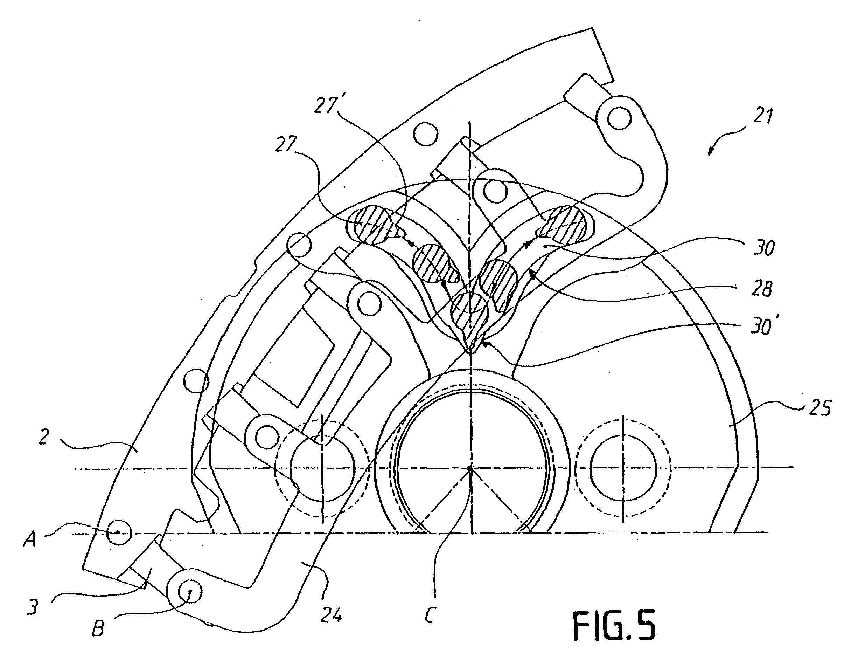

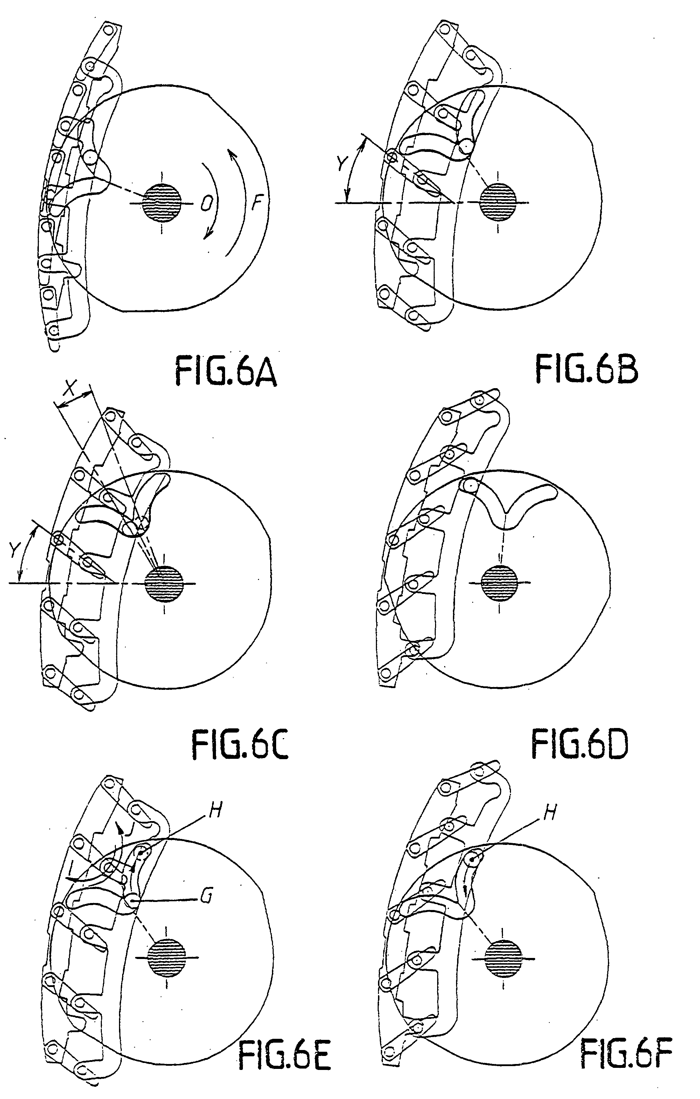

La figure 5 illustre un barillet d'aération 21 qui constitue une deuxième variante de réalisation du barillet d'aération 1 décrit précédemment. Toutes les pièces identiques portent le même numéro de référence. Dans cette variante, la came 28 est prévue dans la molette 25 et est constituée d'une rainure 30 en forme de V ouvert dans laquelle coulisse le doigt de commande 27 solidaire de la barrette de liaison 24. Au point le plus bas de la rainure 30 est prévu un creux 30' agencé pour recevoir une dent d'indexage 27' prévue sur le doigt de commande 27. Pour mieux comprendre le but recherché par cette variante de réalisation, les figures 6A à 6F illustrent ce même barillet d'aérateur 21 mais sans la dent d'indexage 27' ni le creux 30'. Dans le sens de la flèche O, la molette de commande 25 entraîne l'ouverture des ailettes directionnelles 3 et inversement dans le sens de la flèche F. La figure 6A illustre les ailettes 3 en position fermée, les figures 6B et 6C illustrent les ailettes 3 dans des positions intermédiaires et la figure 6D illustre les ailettes 3 en position d'ouverture totale des ailettes. Entre les positions illustrées par les figures 6B et 6C, on constate que la molette de commande 25 peut effectuer une rotation angulaire X sans que cela engendre un déplacement de la barrette de liaison 24 et une rotation des ailettes 3. L'angle Y de rotation des ailettes 3 reste identique. Il existe alors une course dite "morte" quel que soit le sens de rotation O ou F de la molette de commande 25. D'autre part, dans la figure 6E, qui correspond à la figure 6B, il est possible de déplacer manuellement la barrette de liaison 24 du point G au point H (figure 6F) sans pour cela entraîner une rotation de la molette de commande 25. Lors de cette manoeuvre, on inverse le sens normal de rotation des ailettes 3. La flèche I représente le sens de rotation normale pour aller du point G au point H et la flèche J représente le sens de rotation fausse des ailettes 3 pour aller du point G au point H. De ce fait, le fonctionnement normal de la cinématique n'est plus respecté. La barrette de liaison 24 translatée au point H (figure 6F) par rapport à la molette de commande 25 engendre le non fonctionnement de la cinématique de commande. La molette de commande 25 ne peut plus inverser la barrette de liaison 24 et, sous l'effet de cette résistance, elle casse systématiquement.
Pour éviter ces inconvénients, le doigt de commande 27 a été complété par un doigt d'indexage 27' et la rainure 30 de la came 28 par un creux 30', en référence aux figures 5 et 6G. Cette dent d'indexage 27' a pour effet d'assurer l'entraînement continuel de la barrette de liaison 24 sous l'action de la rotation de la molette de commande 25. Ainsi, la course "morte" est supprimée et les ailettes 3 ne peuvent pas effectuer la rotation suivant la flèche J pour que la barrette de liaison 24 se translate du point G au point H car la dent d'indexage 27' entre en interférence avec la came 28 de la molette de commande 25.

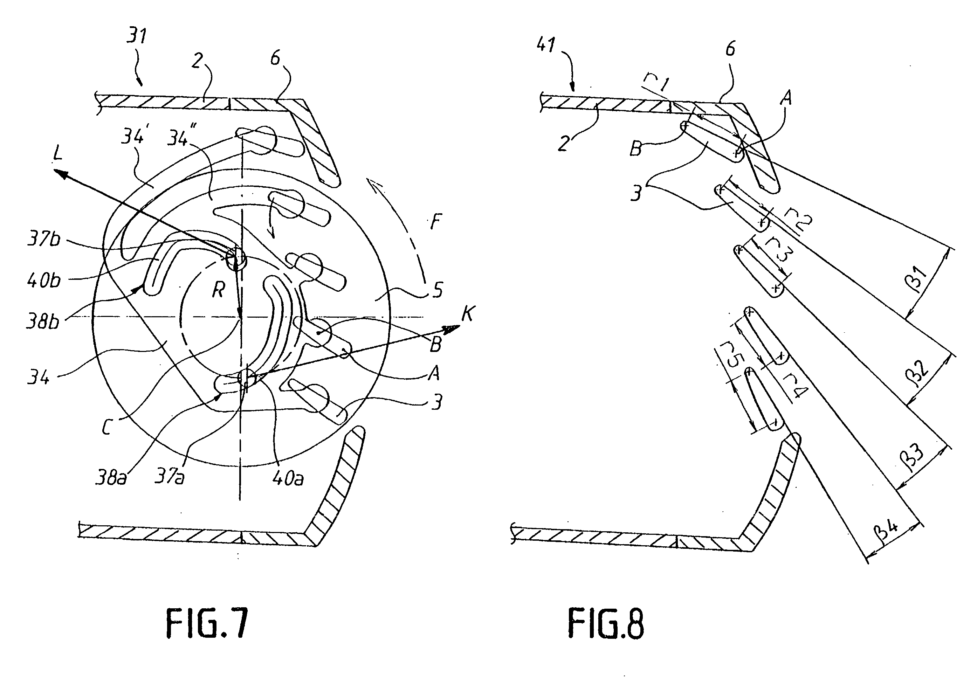

La figure 7 illustre un barillet d'aération 31 qui constitue une troisième variante de réalisation du barillet d'aération 1 décrit précédemment. Toutes les pièces identiques portent le même numéro de référence. Dans cette variante, la barrette de liaison 34 comporte deux cames 38a et 38b situées de part et d'autre de l'axe C de rotation de la molette de commande 5. Chaque came 38a, 38b coopère avec un doigt de commande respectivement 37a et 37b prévu sur la molette 5. Les doigts 37a, 37b sont diamétralement opposés par rapport à l'axe C de rotation de la molette de commande 5 et distants de cette axe du rayon R. Le doigt de commande 37a agit sur la came 38a dans la direction de la flèche K pour l'ouverture des ailettes 3, dans le sens inverse de la flèche F, et le doigt de commande 37b agit sur la came 38b dans la direction de la flèche L pour la fermeture desdites ailettes 3, dans le sens de la flèche F. Les deux cames 38a, 38b ont par conséquent des formes gauches différentes pour optimiser le déplacement des ailettes 3. La barrette de liaison 34 présente, dans cette variante de réalisation, une surface plus importante que dans les réalisations décrites plus haut et les bras de liaison 34', 34" aux ailettes 3 supérieures sont très allongés et ont une grande souplesse. Cette variante de réalisation est généralement utilisée pour des courses importantes entre l'ouverture et la fermeture des ailettes dans le but de maîtriser le sens de rotation des ailettes. Dans une réalisation à une seule came, la barrette de liaison du fait de sa longueur a tendance à s'arc-bouter, permettant la rotation des ailettes en sens inverse. Avec la double came, cet inconvénient est supprimé.

La figure 8 illustre un barillet d'aération 41 qui constitue une quatrième variante de réalisation du barillet d'aération 1 décrit précédemment. Dans cette variante, seules les ailettes 3 sont représentées dans le corps 2 du barillet. La distance entre les points de pivotement A et B est différente pour chaque ailette 3. Ainsi on a r1 différent de r2 différent de r3 différent de r4 différent de r5. Les rayons n'étant pas identiques, pour un déplacement de la barrette de liaison (non représentée), on obtient un déplacement angulaire différent pour chaque ailette 3 et donc un angle d'ouverture entre chaque ailette différent. Ainsi on a β1 différent de β2 différent de β3 différent de β4. On obtient un effet éventail. Cette variante de réalisation peut être appliquée à chaque mode de réalisation décrit précédemment et, notamment, à celui illustré par la figure 7 compte tenu de la souplesse de la barrette de liaison.

La présente invention n'est pas limitée aux exemples de réalisation décrits mais s'étend à toute modification et variante évidente pour un homme du métier. Notamment la forme des barrettes de liaison et celle des cames ne sont pas limitées. Les angles de manoeuvre et de déplacement des différentes pièces peuvent également variés en fonction des besoins. De même, la liaison directe entre la molette de commande et la barrette de liaison peut être appliquée à différents types et formes de barillet d'aérateur.

## Revendications

1. Barillet d'aérateur (1, 21, 31, 41) pour un véhicule automobile comportant un corps (2) monté dans l'habitacle du véhicule à la sortie d'un conduit d'air, au moins un jeu d'ailettes directionnelles (3) pour défléchir le flux d'air, parallèles, pivotantes et montées dans ledit corps autour d'axes de pivotement fixes A, reliées entre elles par une barrette de liaison (4, 24, 34) en des points de liaison B distants des axes de pivotement A, et une molette de commande (5, 25) montée en rotation autour d'un axe fixe C dans ledit corps, **caractérisé en ce que** la barrette de liaison (4, 24, 34) est disposée dans un plan sensiblement parallèle à celui défini par la molette de commande (5, 25) et **en ce que** la molette de commande (5, 25) est couplée positivement et directement à ladite barrette de liaison (4, 24, 34) par au moins un doigt de commande (7, 27, 37a, 37b) solidaire de l'une des pièces constituées par la molette et la barrette, et par au moins une came (8, 18, 28, 38a, 38b) prévue sur l'autre pièce, cet axe de commande étant sensiblement parallèle à l'axe de rotation C de la molette.

2. Barillet selon la revendication 1, **caractérisé en ce que** le doigt de commande (7, 37a, 37b) est solidaire de la molette de commande (5) et distant de son axe de rotation C d'un rayon R, et la came (8, 18, 38a, 38b) est solidaire de la barrette de liaison (4, 34).

3. Barillet selon la revendication 2, **caractérisé en ce que** le doigt de commande (7, 37a, 37b) traverse ledit corps (2) par l'intermédiaire d'une lumière (9) en arc de cercle dont le centre est confondu avec l'axe de rotation C de la molette (5).

4. Barillet selon la revendication 3, **caractérisé en ce que** ladite lumière (9) s'étend sur un secteur angulaire d'angle α délimitant la rotation de la molette de commande (5) entre deux positions extrêmes.

5. Barillet selon l'une quelconque des revendications précédentes, **caractérisé en ce que** la came (8, 38a, 38b) s'étend sur une longueur au moins égale à celle parcourue par le doigt de commande (7, 37a, 37b) entre les deux positions extrêmes de la molette de commande (5) de manière à commander la rotation des ailettes directionnelles (3) entre leurs deux positions extrêmes qui correspondent à une position des ailettes totalement fermée et une position des ailettes totalement ouverte.

6. Barillet selon l'une quelconque des revendications précédentes, **caractérisé en ce que** la came (8, 38a, 38b) est une rampe de forme gauche.

7. Barillet selon l'une quelconque des revendications 1 à 5, **caractérisé en ce que** la came (8, 38a, 38b) est une rainure (10, 20, 40a, 40b) de forme gauche dont la section est sensiblement égale au diamètre du doigt de commande (7, 37a, 37b).

8. Barillet selon l'une quelconque des revendications précédentes, **caractérisé en ce que** la came (18) comporte une zone de verrouillage (20') agencée pour verrouiller les ailettes (3) en position fermée.

9. Barillet selon l'une quelconque des revendications 1 à 7, **caractérisé en ce qu'**il comporte deux cames (38a, 38b) coopérant respectivement avec deux doigts de commande (37a, 37b), une des cames étant agencée pour ouvrir les ailettes (3) et l'autre pour les fermer.

10. Barillet selon la revendication 1, **caractérisé en ce que** le doigt de commande (27) est solidaire de la barrette de liaison (24) et la came (28) est solidaire de la molette de commande (25).

11. Barillet selon la revendication 10, **caractérisé en ce que** la came (28) est une rainure (30) sensiblement en forme de V et comporte à son point le plus bas un creux (30') et **en ce que** le doigt de commande (27) comporte une dent d'indexage (27') agencée pour assurer le déplacement en continu et dans le bon sens des ailettes (3) lors de la rotation de la molette de commande (25).

12. Barillet selon l'une quelconque des revendications précédentes, **caractérisé en ce que** la distance entre l'axe de pivotement fixe A et le point de liaison B est différente pour chaque ailettes (3) de manière à créer un effet éventail.

## Patentansprüche

1. Luftverteiler (1,21,31,41) für ein Kraftfahrzeug, mit einem in dem Karosseriegehäuse des Kraftfahrzeuges an dem Auslaß eines Luftkanals montierten Körper (2), mit mindestens einem Satz von Leitrippen (3) zum Ablenken des Luftflusses, die in dem Körper parallel, schwenkbar und um feste Schwenkachsen A herum angebracht sind, wobei sie durch einen Verbindungssteg (4,24,34) an von den Schwenkachsen A entfernten Verbindungspunkten B miteinander verbunden sind, und mit einem in dem Körper um eine feste Achse C drehbar angebrachten Bedienungsrädchen (5,25), **dadurch gekennzeichnet, daß** der Verbindungssteg (4,24,34) in einer Ebene angebracht ist, die nahezu parallel zu der durch das Bedienungsrädchen (5,25) definierten verläuft, und daß das Bedienungsrädchen (5,25) mit dem Verbindungssteg (4,24,34) mittels mindestens einem Betätigungszapfen (7,27,37a,37b) positiv und direkt verbunden ist, der mit einem der aus dem Rädchen und dem Steg bestehenden Stücken und mittels mindestens einem auf dem anderen Stück vorgesehenen Nocken (8,18,28,38a,38b) einstückig verbunden ist, wobei die Betätigungsachse praktisch parallel zu der Drehachse C des Rädchens verläuft.

2. Verteiler nach Anspruch 1, **dadurch gekennzeichnet, daß** der Betätigungszapfen (7,37a,37b) mit dem Bedienungsrädchen (5) einstückig verbunden und von dessen Drehachse C mit einem Radius R entfernt ist, und daß der Nocken (8,18,38a,38b) mit dem Verbindungssteg (4,34) einstückig verbunden ist.

3. Verteiler nach Anspruch 2, **dadurch gekennzeichnet, daß** der Betätigungszapfen (7,37a,37b) den Körper (2) mittels eines kreisbogenförmigen Schlitzloches (9) durchquert, dessen Mittelpunkt mit der Drehachse C des Rädchens (5) zusammenfällt.

4. Verteiler nach Anspruch 3, **dadurch gekennzeichnet, daß** sich das Schlitzloch (9) über einen Winkelbereich α erstreckt und die Drehung des Bedienungsrädchens (5) zwischen zwei Endpositionen begrenzt.

5. Verteiler nach einem beliebigen der vorangegangenen Ansprüche, **dadurch gekennzeichnet, daß** sich der Nocken (8,38a,38b) über eine Länge erstreckt, die mindestens gleich derjenigen ist, die von dem Betätigungszapfen (7,37a,37b) zwischen den zwei Endpositionen des Bedienungsrädchens (5) durchlaufen wird, so daß er die Drehung der Leitrippen (3) zwischen ihren zwei Endpositionen veranlaßt, die einer vollständig geschlossenen Position der Rippen und einer vollständig geöffneten Position der Rippen entspricht.

6. Verteiler nach einem beliebigen der vorangegangenen Ansprüche, **dadurch gekennzeichnet, daß** der Nocken (8,38a,38b) eine Rampe mit gekrümmter Form ist.

7. Verteiler nach einem beliebigen der Ansprüche 1 bis 5, **dadurch gekennzeichnet, daß** der Nocken (8,38a,38b) eine Nut (10,20,40a,40b) mit gekrümmter Form ist, deren Querschnitt praktisch gleich dem Durchmesser des Betätigungszapfens (7,37a,37b) ist.

8. Verteiler nach einem beliebigen der vorangegangenen Ansprüche, **dadurch gekennzeichnet, daß** der Nocken (18) eine Arretierungszone (20') aufweist, die so angeordnet ist, daß sie die Rippen (3) in geschlossener Position arretiert.

9. Verteiler nach einem beliebigen der Ansprüche 1 bis 7, **dadurch gekennzeichnet, daß** er zwei Nocken (38a,38b) aufweist, die jeweils mit den zwei Betätigungszapfen (37a,37b) zusammenwirken, wobei einer der Nocken so angeordnet ist, daß er die Rippen öffnet, und der andere so angeordnet ist, daß er sie schließt.

10. Verteiler nach Anspruch 1, **dadurch gekennzeichnet, daß** der Betätigungszapfen (27) mit dem Verbindungssteg einstückig verbunden ist, und der Nocken (28) mit dem Bedienungsrädchen (25) einstückig verbunden ist.

11. Verteiler nach Anspruch 10, **dadurch gekennzeichnet, daß** der Nocken (28) eine praktisch V-förmige Nut (30) ist, die an ihrem niedrigsten Punkt eine Ausnehmung (30') aufweist, und daß der Betätigungszapfen (27) einen Indexierungszapfen (27') aufweist, der so angeordnet ist, daß er bei Drehung des Bedienungsrädchens (25) die kontinuierliche Verlagerung der Rippen (3) in der richtigen Richtung sicherstellt.

12. Verteiler nach einem beliebigen der vorangegangenen Ansprüche, **dadurch gekennzeichnet, daß** die Distanz zwischen der festen Schwenkachse A und dem Verbindungspunkt B für jede Rippe (3) so unterschiedlich ist, daß eine Fächerwirkung erzielt wird.

## Claims

1. A fan barrel (1, 21, 31, 41) for a motor vehicle comprising a body (2) mounted in the passenger compartment of the vehicle at the outlet of an air duct, at least one set of directional blades (3) to deflect the flow of air, which are parallel, pivoting and mounted in the said body around fixed swivel pins A, interconnected by a connecting bar (4, 24, 34) at connection points B spaced from the pivot pins A, and a control knob (5, 25) mounted to rotate around a fixed axis C in the said body, **characterised in that** the connecting bar (4, 24, 34) is disposed in a plane substantially parallel to that defined by the control knob (5, 25) and **in that** the control knob (5, 25) is coupled positively and directly to the said connecting bar (4, 24, 34) by at least one control finger (7, 27, 37a, 37b) joined to one of the parts formed by the knob and the bar, and by at least one cam (8, 18, 28, 38a, 38b) provided on the other part, this control axis being substantially parallel to the axis of rotation C of the knob.

2. A barrel according to Claim 1, **characterised in that** the control finger (7, 37a, 37b) is joined to the control knob (5) and spaced from its axis of rotation C by a radius R, and the cam (8, 18, 38a, 38b) is joined to the connecting bar (4, 34).

3. A barrel according to Claim 2, **characterised in that** the control linger (7, 37a, 37b) passes through the said body (2) by means of a slot (9) shaped as an. arc of a circle, the centre of which is merged with the axis of rotation C of the knob (5).

4. A barrel according to Claim 3, **characterised in that** the said slot (9) extends over an angular sector of an angle µ delimiting the rotation of the control knob (5) between two extreme positions.

5. A barrel according to any one of the preceding Claims, **characterised in that** the cam (8, 38a, 38b) extends over a length at least equal to that travelled by the control finger (7, 37a, 37b) between the two extreme positions of the control knob (5) so as to control the rotation of the directional blades (3) between their two extreme positions which correspond to a totally closed position of the blades and a totally open position of the blades.

6. A barrel according to any one of the preceding Claims, **characterised in that** the cam (8, 38a, 38b) is a ramp with a left-hand shape.

7. A barrel according to any one of Claims 1 to 5, **characterised in that** the cam (8, 38a, 38b) is a groove (10, 20, 40a, 40b) with a left-hand shape, the section of which is substantially equal to the diameter of the control finger (7, 37a, 37b).

8. A barrel according to any one of the preceding Claims, **characterised in that** the cam (18) comprises a locking zone (20') designed to lock the blades (3) in the closed position.

9. A barrel according to any one of Claims 1 to 7, **characterised in that** it comprises two cams (38a, 38b) cooperating respectively with two control fingers (37a, 37b), one of the cams being designed to open the blades (3) and the other to close them.

10. A barrel according to Claim 1, **characterised in that** the control linger (27) is joined to the connecting bar (24) and the cam (28) is joined to the control knob (25).

11. A barrel according to Claim 10, **characterised in that** the cam (28) is a substantially V-shaped groove (30) and at its lowest point comprises a hollow (30') and **in that** the control finger (27) comprises an indexing tooth (27') designed to ensure the continuous displacement in the correct direction of the blades (3) upon the rotation of the control knob (25).

12. A barrel according to any one of the preceding Claims, **characterised in that** the distance between the fixed pivot pin A and the connection point B is different for each blade (3) so as to create a fan effect.
